# EUROPÄISCHE PATENTSCHRIFT

(11) **EP 1 307 767 B1**
(45) Veröffentlichungstag und Bekanntmachung des Hinweises auf die Patenterteilung: **24.12.2008**
(21) Anmeldenummer: 01960099.8
(22) Anmeldetag: 28.06.2001
(51) Int. Cl.: G02B 1/11

(54) **REFLEXIONSMINDERNDE BESCHICHTUNG**
REFLECTION-REDUCING COATING
REVETEMENT REDUISANT LA REFLEXION

(30) Priorität: 10.07.2000 DE 10034158
(43) Veröffentlichungstag der Anmeldung: 07.05.2003
(73) Patentinhaber: Fraunhofer-Gesellschaft zur Förderung der angewandten Forschung e.V., 80686 München (DE)
(72) Erfinder: SCHULZ, Ulrike, 07751 Kunitz (DE); KAISER, Norbert, 07745 Jena (DE); SCHALLENBERG, Uwe, 07743 Jena (DE)
(74) Vertreter: Pfenning, Meinig & Partner GbR
(86) Internationale Anmeldenummer: PCT/DE2001/002501
(87) Internationale Veröffentlichungsnummer: WO 2002/004374

(56) Entgegenhaltungen:
- US-A- 4 798 994
- US-A- 4 931 315

## Beschreibung

Die Erfindung betrifft eine reflexionsmindernde Beschichtung gemäß dem Oberbegriff des Anspruchs 1. Mit der erfindungsgemäßen Lösung kann die Reflexion von auf die Oberfläche von Substraten auftreffendem Licht effektiv und in hohem Maße verringert werden, was für viele Anwendungsfälle, insbesondere für viele optische Elemente (Linsen, Fenster, Prismen u.a.) oder optoelektronische Elemente und auch für Brillengläser wünschenswert ist. Die Beschichtung kann besonders vorteilhaft zur Reflexionsverminderung im sichtbaren Spektralbereich eingesetzt werden.

Für viele Applikationen und hier sollen Brillengläser explizit genannt werden, ist es ebenfalls erforderlich, eine entsprechende "Antireflexbeschichtung" mit hoher Abriebbeständigkeit zur Verfügung zu stellen.

In der Vergangenheit hat sich auch Kunststoff, insbesondere wegen der Herstellungskosten und der im Vergleich zu Gläsern geringeren Dichte als Material für optische Elemente und Brillengläser durchgesetzt.

Kunststoff weist zwar äquivalente optische Eigenschaften gegenüber den bis dato verwendeten Gläsern auf, verfügt aber über eine wesentlich geringere Kratzfestigkeit, so dass bei mechanischen, abrasiv wirkenden Einflüssen die Oberflächen beschädigt und das optische Verhalten entsprechend verschlechtert wird.

Für optische Bauteile und insbesondere Brillengläser sind abriebbeständige und reflexionsvermindernde Oberflächen, die nur durch entsprechende Beschichtungen erhalten werden können, erforderlich.

Solche Beschichtungen müssen beispielsweise auch bei erforderlichen Reinigungsprozessen eine ausreichende Wischfestigkeit gemäß der Internationalen Norm ISO 9211-02 erfüllen, die mit Baumwolltüchern oder Radiergummi durchgeführt werden.

Insbesondere bei Brillengläsern werden Hartschichten mit einer Dicke von mehreren Mikrometern und darauf eine zusätzliche reflexionsmindernde Beschichtung aufgebracht.

Solche Hartschichten können durch Auftrag von Lack und dem nachfolgenden Aufdampfen einer reflexionsmindernden Beschichtung, wie von W. Köppen und E. Kampmeyer in DOZ 2(1995); Seiten 22 bis 26 beschrieben, hergestellt werden.

Die Erzeugung von Hartschichten durch Plasmapolymerisation geht auf J. Bötschi, F. Thieboud zurück und ist in DOZ 10 (1992); Seiten 26 bis 27 und für das Aufdampfen solcher Hartschichten von D. Giessner in NOJ 5 (1995); Seiten 62 bis 64 erwähnt, wobei es sich bei der letztgenannten Veröffentlichung um organisch modifizierte Quarzschichten handelt. Im Nachgang zum Aufbringen solcher Hartschichten ist es wiederum erforderlich, durch bekannte CVD- bzw. PVD-Verfahren die reflexionsmindernde Deckschicht aufzubringen.

Insbesondere an thermoplastische Polymere, wie Polymethylmethacrylat, Polycarbonat und andere solche Kunststoffe, werden die gleichen Anforderungen, wie an andere Substratmaterialien gestellt, wobei bisher entsprechend geeignete Beschichtungen nasschemisch oder durch Aufdampfen bzw. eine Kombination dieser Beschichtungsverfahren erhalten werden. So ist ein nasschemischer Auftrag mit bekannten Lackiertechniken ein zusätzlicher Herstellungsschritt, der vom Verfahrensschritt der Ausbildung der reflexionsmindernden Schicht entkoppelt ist, aufwendig und teuer. Für Präzisionsoptiken mit sehr unregelmäßig geformten bzw. stark gekrümmten Oberflächen und bei kleinteiligen optischen Elementen sind solche Verfahren ungeeignet. Bei einer reflexionsmindernden Beschichtung, die auf eine relativ Dicke abriebfestere Hartschicht aufgebracht worden ist, tritt eine zusätzliche Welligkeit der spektralen Reflexion des Gesamtschichtsystems, infolge Interferenzwirkung bei unterschiedlichem Brechungsindize von Substratmaterial und Hartschicht auf.

Für breitbandige reflexionsvermindernde Beschichtungen, die beispielsweise den Wellenlängenbereich des sichtbaren Lichtes abdecken, sind zwei bis sechs Einzelschichten erforderlich. Bei den bekannten Wechselschichtsystemen kann es zu einer Erwärmung des Substrates kommen. Es können Temperaturen erreicht werden, die oberhalb von kritischen Erweichungstemperaturen (z.B. 80 bis 110 °C bei, Acrylaten) des Substratmaterials liegen. Die Erwärmung erfolgt dabei im Wesentlichen durch die Verdampfung des hochbrechenden Schichtmaterials.

Es ist daher Aufgabe der Erfindung, eine reflexionsmindernde Beschichtung auf einem Substrat zur Verfügung zu stellen, die auf beliebigen Substraten aufgebracht werden kann, ohne dass beim Auftragen eine unzulässige Erwärmung auftritt.

Erfindungsgemäß wird diese Aufgabe mit einer Beschichtung gemäß Anspruch 1 gelöst. Vorteilhafte Ausgestaltungsformen und Weiterbildungen der Erfindung können mit den in den untergeordneten Ansprüchen genannten Merkmalen erreicht werden.

Die erfindungsgemäße reflexionsmindernde Beschichtung wird aus einem alternierenden Wechselschichtsystem, unterschiedlicher Schichtmaterialien mit jeweils niedrigerem und höherem Brechungsindex, gebildet.

Dabei wird das Schichtsystem so ausgelegt, dass die Summe der Schichtdicken von Schichten mit höherem Brechungsindex ≤ 5%, der Gesamtschichtdicke der Beschichtung beträgt. Diese Schichten sind innerhalb der Schichtfolge des Wechselschichtsystems weitestgehend gleichmäßig verteilt angeordnet. Die gleichmäßige Verteilung und Auswahl der Dicken der sehr dünnen höherbrechenden Schichten erfolgt unter Berücksichtigung eines vorgegebenen Wellenlängenbereiches des Lichtes sowie der optischen Eigenschaften der Schicht- und Substratmaterialien.

Das Substrat ist bevorzugt im Wellenlängenbereich, in dem die Reflexion verhindert werden soll, optisch transparent. Durch die Beschichtung wird die Transparenz erhöht.

Als Substratmaterial können neben den üblicherweise verwendeten optischen Gläsern auch die unterschiedlichsten Kunststoffe, wie z.B. Polycarbonat und Polymethylmethacrylat, aber auch temperaturempfindliche Kristallmaterialien eingesetzt werden, wobei die Beschichtung mit Verfahren für die Substratvorbehandlung und Schichtausbildung, wie sie in DE 197 03 538 A1 und DE 197 52 889 C1 beschrieben sind, aufgebracht werden kann. Mit der Erfindung ist es möglich, die unerwünschte Erwärmung des Substratmaterials auszuschließen.

Als Schichtmaterialien für die Einzelschichten des Wechselschichtsystems mit höherem Brechungsindex können Oxide oder Fluoride bevorzugt von Elementen der IV. und V. Nebengruppen eingesetzt werden. Beispiele sind Ta₂O₅, ZrO₂, HfO₂, TiO₂ oder auch Indium-Zinn-Oxid (ITO).

Für die Schichten aus Materialien mit entsprechend niedrigerem Brechungsindex können vorteilhaft SiO₂ und MgF₂ eingesetzt werden, wobei insbesondere SiO₂ günstige Eigenschaften als Hartschicht aufweist. Generell besteht die die Grenzschicht zu Luft bildende Schicht aus niedrigbrechendem Material.

Das die Reflexion vermindernde Wechselschichtsystem kann aus Schichten lediglich zweier Materialien mit den entsprechenden Brechungsinizes gebildet sein. Es besteht aber auch die Möglichkeit, ein solches Wechselschichtsystem aus mehreren solcher Materialien auszubilden.

Ein solches Wechselschichtsystem kann auf einen vorgebbaren Wellenlängenbereich des Lichtes abgestimmt werden, wobei Möglichkeiten bestehen, eine Abstimmung für den Wellenlängenbereich des sichtbaren Lichtes, des Lichtes im nahen Infrarotbereich und auch im UV-Bereich vorzunehmen.

Für das Wechselschichtsystem müssen mindestens fünf, bevorzugt mindestens neun Einzelschichten eingesetzt werden, wobei jedoch die Anzahl der Schichten auch wesentlich größer gewählt werden kann.

Die gesamte Beschichtung kann im sichtbaren Spektralbereich eine Gesamtdicke zwischen 500 und 2500 nm, bevorzugt zwischen 750 bis 2000 nm aufweisen.

Bei Bedarf kann die erfindungsgemäße Beschichtung auf eine auf der Substratoberfläche bereits vorhandener Schicht oder Beschichtung aufgebracht werden.

Wird beispielsweise SiO₂ als Hartschichtkomponente in einem Wechselschichtsystem für eine erfindungsgemäß auf einem optisch transparenten Substrat ausgebildete Beschichtung eingesetzt, bildet das Schichtsystem eine Einheit, die gleichzeitig eine hohe Abriebfestigkeit und eine hohe reflexionsmindernde Wirkung aufweist.

### Beispiel 1

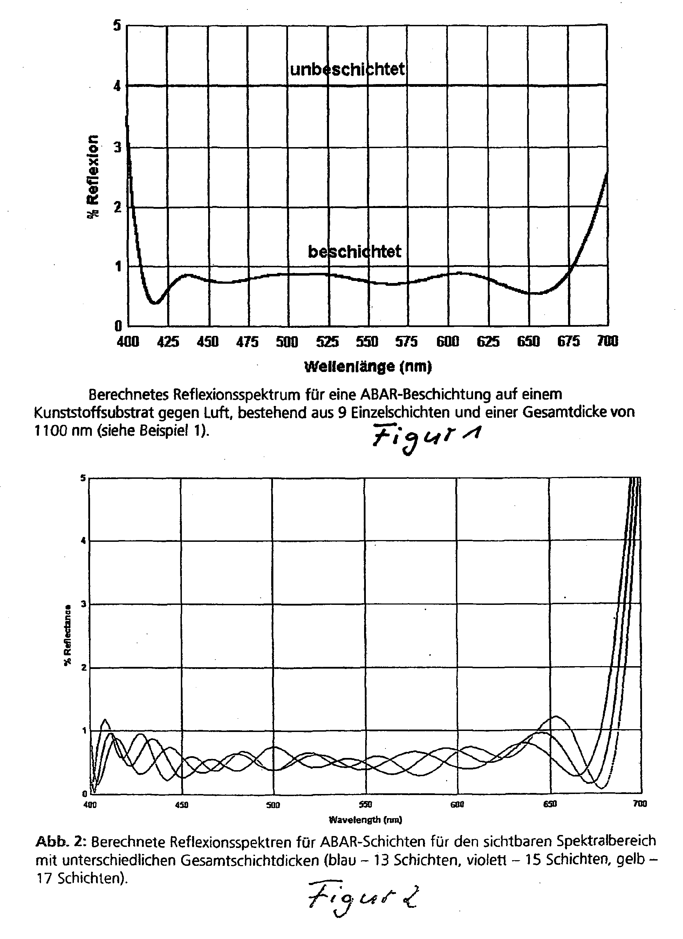

Eine Beschichtung für den sichtbaren Spektralbereich im Wellenlängenbereich zwischen λ₁ = 420 nm und λ₂ = 670 nm kann z.B. folgendes Schichtdesign aufweisen, das mit konstanten Brechzahlen von 1,5 für das Substrat 1,46 für die SiO₂-Schichten, 2,1 für die Ta₂O₅-Schichten und 1,0 für Luft berechnet wurde. Das Reflexionsverhalten im Wellenlängenbereich ist in Figur 1 grafisch dargestellt.

### Substrat PMMA

1. Schicht 210 nm SiO₂
2. Schicht 4 nm Ta₂O₅
3. Schicht 251 nm SiO₂
4. Schicht 6 nm Ta₂O₅
5. Schicht 248 nm SiO₂
6. Schicht 9 nm Ta₂O₅
7. Schicht 237 nm SiO₂
8. Schicht 16 nm Ta₂O₅
9. Schicht 119 nm SiO₂ Luft

Die Gesamtdicke der Schichtfolge beträgt 1100 nm, davon entfallen 1065 nm auf die in der Summe als Hartschicht wirkenden SiO₂-Schichten und lediglich 35 nm auf die für die zusätzliche Antireflexwirkung notwendigen Ta₂O₅-Schichten.

Durch Einbau weiterer Schichtpaare aus SiO₂ und Ta₂O₅ ähnlicher Dicke nach der fünften Schicht kann die Gesamtschichtdicke und damit die mechanische Stabilität des Schichtsystems erhöht werden. Durch Entfernen der Schichten 4 und 5 bzw. 4 bis 7 kann das Schichtdesign reduziert werden, ohne dass die Antireflexwirkung verloren geht.

Das entsprechende Reflexionsverhalten dieser Schichtsysteme ist in dem in Figur 2 gezeigten Diagramm verdeutlicht.

Beschichtungen aus SiO₂- und Ta₂O₅-Schichten auf Kunststoffen sind im sichtbaren Spektralbereich z.B. mit folgenden Schichtenzahlen und Gesamtschichtdicken möglich:
7 Schichten ca. 850 nm
9 Schichten: ca. 1100 nm
11 Schichten: ca. 1300 nm
13 Schichten: ca. 1600 nm
15 Schichten: ca. 1850 nm
17 Schichten: ca. 2100 nm

### Beispiel 2

Neben Beschichtungen für den VIS-Bereich sind auch analoge Schichtfolgen für den NIR- und den UV-Bereich möglich, welche sowohl abriebfest sind, wie auch reflexionsmindernd wirken und auf die genannten empfindlichen Substratmaterialien aufgebracht werden können. Für den NIR-Wellenlängenbereich zwischen λ₁ = 700 nm und λ₂ = 1100 nm ist folgende Schichtfolge mit neun Einzelschichten möglich. Sie wurde mit konstanten Brechzahlen von 1,5 für das Substrat, 1,46 für die SiO₂-Schichten, 2,1 für die Ta₂O₅-Schichten und 1,0 für Luft berechnet.

### Substrat Kunststoff

1. Schicht 349 nm SiO₂
2. Schicht 6,5 nm Ta₂O₅
3. Schicht 417 nm SiO₂
4. Schicht 10 nm Ta₂O₅
5. Schicht 412 nm SiO₂
6. Schicht 15 nm Ta₂O₅
7. Schicht 393,5 nm SiO₂
8. Schicht 26,5 nm Ta₂O₅
9. Schicht 197,5 nm SiO₂ Luft

Die Gesamtdicke der Schichtfolge beträgt 1827 nm, davon entfallen 1769 nm auf die in der Summe als Hartschicht wirkenden SiO₂-Schichten und lediglich 58 nm auf die für die Antireflexwirkung notwendigen Ta₂O₅-Schichten.

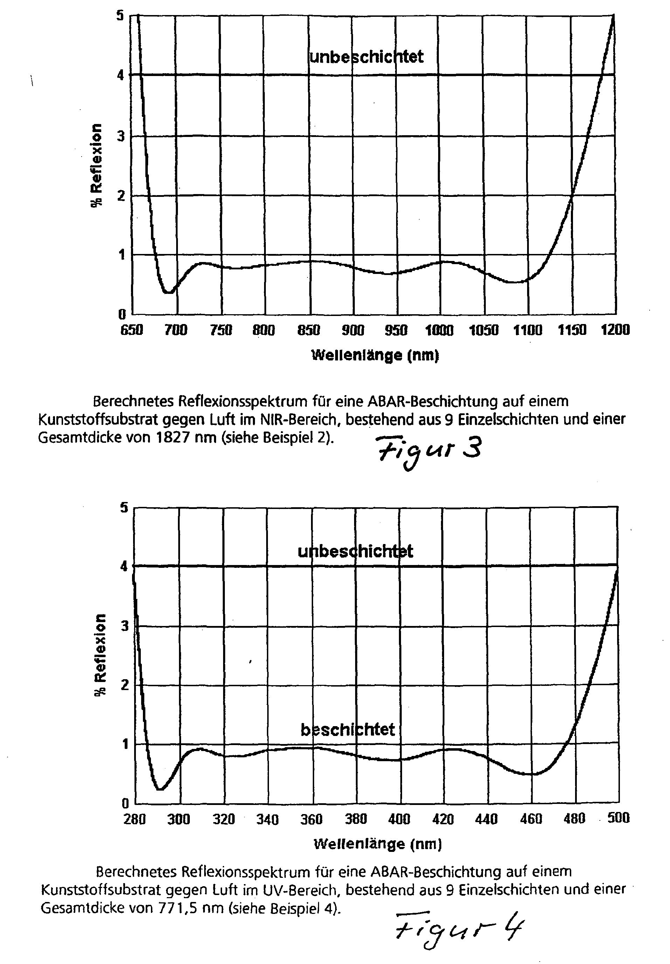

Das Reflexionsverhalten für diesen Wellenlängenbereich ist im Diagramm Figur 3 verdeutlicht worden.

### Beispiel 3

Für den UV-Wellenlängenbereich zwischen λ₁ = 290 nm und λ₂ = 470 nm ist folgende Schichtfolge mit neun Einzelschichten möglich. Sie wurde mit konstanten Brechzahlen von 1,5 für das Substrat, 1,46 für die SiO₂-Schichten, 2,1 für die Ta₂O₅-Schichten und 1,0 für Luft berechnet.

### Substrat Kunststoff

1. Schicht 147 nm SiO₂
2. Schicht 3 nm Ta₂O₅
3. Schicht 176 nm SiO₂
4. Schicht 4,5 nm Ta₂O₅
5. Schicht 174 nm SiO₂
6. Schicht 6,5 nm Ta₂O₅
7. Schicht 166 nm SiO₂
8. Schicht 11 nm Ta₂O₅
9. Schicht 83,5 nm SiO₂ Luft

Figur 4 zeigt das entsprechende Reflexionsverhalten diagrammartig.

Die Gesamtdicke der Schichtfolge beträgt 771 nm, davon entfallen 746,5 nm auf die in der Summe als Hartschicht wirkenden SiO₂-Schichten und lediglich 25 nm auf die für die Antireflexwirkung notwendigen Ta₂O₅-Schichten.

Die Güte der Antireflexwirkung ist abhängig von der Brechzahl des niedrigbrechenden Schichtmaterials. Neben dem bisher angeführten SiO₂ mit einer Brechzahl von 1,46 ist als niedrigbrechendes Material z.B. auch MgF₂ mit einer Brechzahl von 1,38 möglich. Auch die hochbrechenden Schichten können aus einem anderen Material, z.B. aus ZrO₂ mit einer Brechzahl von 2,0 bestehen. Bei Verwendung eines Materials mit einer geringeren Brechzahl als SiO₂ kann für die mittlere Restreflexion im Wellenlängenbereich zwischen λ₁ und λ₂, z.B. mit MgF₂ ein Wert kleiner als 0,5% erreicht werden.

### Beispiel 4

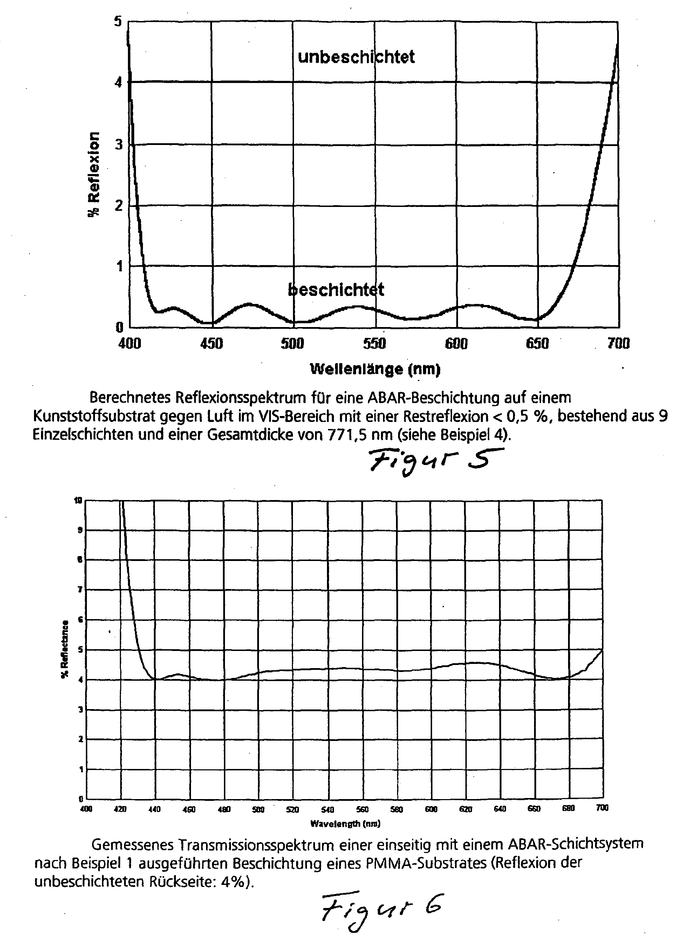

Eine Beschichtung für den sichtbaren Spektralbereich in dem Wellenlängenbereich zwischen λ₁ = 420 nm und λ₂ = 670 nm unter Verwendung der Materialien MgF₂ und ZrO₂ ist z.B. folgendes Schichtdesign möglich. Es wurde mit konstanten Brechzahlen für 1,5 für das Substrat, 1,38 für die MgF₂-Schichten, 2,0 für die ZrO₂-Schichten und 1,0 Luft berechnet. Das Reflexionsverhalten ist in Figur 5 dargestellt.

### Substrat Kunststoff

1. Schicht 222 nm MgF₂
2. Schicht 7 nm ZrO₂
3. Schicht 256 nm MgF₂
4. Schicht 10 nm ZrO₂
5. Schicht 255 nm MgF₂
6. Schicht 13 nm ZrO₂
7. Schicht 245 nm MgF₂
8. Schicht 20,5 nm ZrO₂
9. Schicht 121 nm MgF₂ Luft

Die Gesamtdicke der Schichtfolie beträgt 1149,5 nm, davon entfallen 1099 nm auf die MgF₂-Schichten und 50,5 nm auf die für die Antireflexwirkung notwendigen ZrO₂-Schichten.

Diese Schichtfolge und das dabei eingesetzte niedrigbrechende Material MgF₂ zeigen jedoch nur die prinzipielle Antireflexwirkung, da eine Hartschicht aus MgF₂ i.a. nicht möglich ist. Das hochbrechende Material kann jedoch in einer Beschichtung durchaus variieren und außenseitig eine abriebfestere Deckschicht mit entsprechendem Brechnungsindex aufgebracht werden. In der Kombination mit SiO₂ als Hartschicht sind dabei außer den schon genannten Ta₂O₅ z.b. für den UV-Bereich ZrO₂ sowie HfO₂ und im VIS- und NIR-Bereich TiO₂ oder ITO (Indium-Zinn-Oxid) möglich. Wesentlich für die Verwendung des hochbrechenden Materials ist dabei dessen geringe Gesamtdicke unter 1/20 der Gesamtdicke der Schichtfolge, wodurch gesichert ist, dass bei der Herstellung der Beschichtung eine minimale Wärmebelastung des Kunststoffsubstrates auftritt. Bei Verwendung von Indium-Zinn-Oxid (ITO) kann die Beschichtung zusätzlich antistatisch wirken.

### Beispiel 5

Ein Anwendungsbeispiel ist die Entspiegelung von Brillengläsern sowie von optischen Fenstern aus transparenten Kunststoffen (Polycarbonat oder PMMA), z.B. für Anzeigen von Messgeräten und in Fahrzeugen, welche nach der Beschichtung eine Abriebbeständigkeit nach ISO 9211-02-04 (Radiergummitest, 40 Hübe mit einer Kraft von 10 N) aufweisen sollen.

Die zu beschichtenden Substrate werden in einer Beschichtungsanlage mit Plasma-Ionenquelle vor der eigentlichen Schichtabscheidung 30 Sekunden lang mit Argonionen einer Energie von ca. 100 eV und einer Stromdichte von ca. 0.1 mA/cm² beschossen.

Wenn es sich um Substrate aus PMMA handelt, wird diese Vorbehandlung durch eine Oberflächenmodifizierung von Polymethylmethacrylat, wie sie ausführlich in DE 197 03 538 A1, auf deren Offenbarungsgehalt vollumfänglich Bezug genommen wird, beschrieben ist, ersetzt.

Dabei wird zur Erhöhung der Haftfähigkeit und Stabilität der Beschichtung eine Plasmabehandlung im Vakuum vor dem Aufbringen der Beschichtung durchgeführt. Bei der Plasmabehandlung wird Sauerstoff und ein Wasser enthaltendes Gas zugeführt. Es sollte vorzugsweise ein äquivalenter Anteil von Wasser, der einer relativen Luftfeuchtigkeit von mindestens 40 % entspricht, eingehalten werden. Das Substratmaterial wird dadurch an der Oberfläche abgetragen und parallel dazu eine chemische Reaktion eingeleitet, bei der die Oberfläche des Substrates unter Ausbildung einer Polymerschicht verändert wird. Die an der Oberfläche des Substrates ausgebildete Polymerschicht unterscheidet sich in ihrer chemischen Zusammensetzung und dementsprechend auch mit ihren Eigenschaften deutlich vom unbehandelten Substratmaterial. Dieses oberflächliche Polymermaterial weist einen besonders hohen Anteil von Methylen- und Hydroxylgruppen auf. Bei PMMA als Substrat sind während dieser, die Oberfläche modifizierenden Vorbehandlung die charakteristischen C-O und C=0-Gruppierungen abgebaut worden.

Für die Herstellung der Beschichtung werden abwechselnd Schichten aus SiO₂ und Ta₂O₅ abgeschieden, wobei die wachsende Schicht mit Ar-Ionen einer Energie von 80 eV (Si02) und 120 eV (Ta₂O₅) und einer Stromdichte von ca. 0.1 mA/cm² beschossen wird. Durch Abscheidung des in Beispiel 1 angegebenen Schichtsystems wird die Reflexion einer beschichteten Fläche im sichtbaren Spektralbereich von 420 nm bis 670 nm auf < 1% verringert. Die Durchlässigkeit für sichtbares Licht (Transmission) wird durch eine beidseitige Beschichtung von 92% auf > 98% erhöht. Das Beschichtungsverfahren mit der Argonionenbehandlung ist umfassend in DE 197 52 889 C1 beschrieben.

Die Beschichtung besteht den Abriebtest nach ISO 9211-02-04 ohne Defektbildung sowie einen Abriebtest mit Stahlwolle. Die Kratzfestigkeit wurde damit gegenüber der des unbeschichteten Substrates wesentlich verbessert. Die Figur 6 zeigt die gemessene Transmission bei einseitiger Beschichtung eines so hergestellten Schichtsystems.

### Beispiel 6

Auf einem Substrat eines Cyklo-Olefin-Polymer oder eins Cyklo-Olefin-Copolymer, wie sei beispielsweise unter den Handelsbezeichnungen "Zeonex" und "Topas" kommerziell erhältlich sind, wurde eine reflexionsmindernde Beschichtung aus einem alternierenden Wechselschichtsystem, bestehend aus Einzelschichten, die aus SiO₂ und Ta₂O₅ gebildet sind, aufgebracht. Diese Beschichtung besteht aus insgesamt 27 Einzelschichten und es kann so eine hohe mechanische Stabilität erreicht werden.

Bei der alternierenden Ausbildung der einzelnen Schichten im Vakuum kann vorteilhaft ein ionengestütztes Verfahren durchgeführt werden, wobei die jeweilige Schicht mit Argon-Ionen beschossen wird. Bei einer SiO₂-Schicht kann vorteilhaft mit einer Energie von 80 eV und bei einer Ta₂O₅-Schicht mit einer Energie von 120 eV und jeweils einer Stromdichte von ca. 0,1 mA/cm² gearbeitet werden.

Eine solche Beschichtung ist, obwohl sehr dünne hochbrechende Schichten aus Ta₂O₅ ausgebildet worden sind, unempfindlich gegen systematische Schichtdikkenfehler und es werden keine höheren Ansprüche an die genaue Einhaltung von Schichtdicken gestellt.

Die Beschichtung widersteht dem Abriebtest nach ISO 9211-02-04 ohne Defektbildung und auch einem Abriebtest mit Stahlwolle. Die Kratzfestigkeit ist äquivalent zu einer reinen SiO₂-Schicht mit gleicher Dicke.

Ein Substrat mit einer solchen Beschichtung weist eine sehr gute Klimabeständigkeit auf und es konnten bei Temperaturen zwischen - 35°C und + 100°C keinerlei Rissbildung oder Ablösung der Beschichtung festgestellt werden, so dass die Klimabeständigkeit deutlich höher als die von reinen SiO₂-Einzelschichten oder anderen bekannten reflexionsmindernden Schichten oder Schichtsystemen ist.

Für die reflexionsmindernde Beschichtung bei diesem Beispiel wurde folgender Aufbau gewählt:

### Substrat Cyklo-Olefin-Polymer oder Cyklo-Olefin-Copolymer

1. Schicht 34 nm SiO₂
2. Schicht 3 nm Ta₂O₅
3. Schicht 236 nm SiO₂
4. Schicht 2 nm Ta₂O₅
5. Schicht 254 nm SiO₂
6. Schicht 2 nm Ta₂O₅
7. Schicht 255 nm SiO₂
8. Schicht 3 nm Ta₂O₅
9. Schicht 255 nm SiO₂
10. Schicht 3 nm Ta₂O₅
11. Schicht 254 nm SiO₂
12. Schicht 4 nm Ta₂O₅
13. Schicht 254 nm SiO₂
14. Schicht 4 nm Ta₂O₅
15. Schicht 253 nm SiO₂
16. Schicht 4 nm Ta₂O₅
17. Schicht 253 nm SiO₂
18. Schicht 4 nm Ta₂O₅
19. Schicht 254 nm SiO₂
20. Schicht 3 nm Ta₂O₅
21. Schicht 424 nm SiO₂
22. Schicht 5 nm Ta₂O₅
23. Schicht 225 nm SiO₂
24. Schicht 30 nm Ta₂O₅
25. Schicht 23 nm SiO₂
26. Schicht 56 nm Ta₂O₅
27. Schicht 92 nm SiO₂ Luft

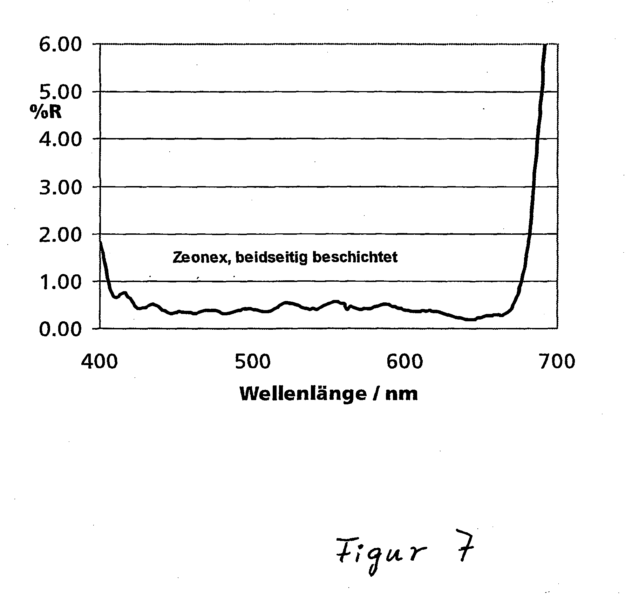

In der Figur 7 ist das Reflexionsverhalten eines beidseitig beschichteten Cyklo-Olefin-Polymer mit der Handelsbezeichnung "Zeonex" dargestellt.

Mit dem Diagramm wird deutlich, dass die Reflexion im sichtbaren Spektralbereich des Lichtes, also bei Wellenlängen zwischen 420 nm bis 670 nm sehr gleichmäßig unter 0,5% gehalten werden kann. Gleichzeitig kann die Durchlässigkeit für sichtbares Licht (Transmission) von 92% auf > 98% erhöht werden, so dass sehr gute optische Eigenschaften gewährleistet sind.

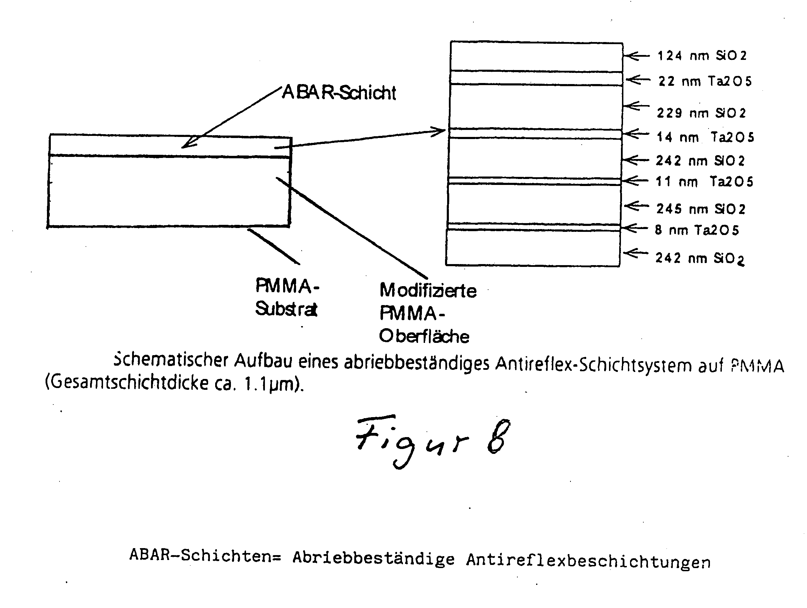

Die Figur 8 zeigt den Aufbau eines Schichtsystems in einem Prinzipschema.

## Patentansprüche

1. Reflexionsmindernde Beschichtung auf einem Substrat, die aus einem alternierenden Wechselschichtsystem unterschiedlicher Schichtmaterialien mit jeweils niedrigerem und höherem Brechungsindex gebildet ist, wobei diese Schichten aus dem Material mit höherem Brechungsindex innerhalb der Schichtfolge des aus mindestens fünf Einzelschichten gebildeten Wechselschichtsystems gleichmäßig verteilt sind
**dadurch gekennzeichnet,**
**dass** die Summe der Schichtdicken dieser Schichten mit höherem Brechungsindex ≤ 5% der Gesamtschichtdicke der Beschichtung ist.

2. Reflexionsmindernde Beschichtung nach Anspruch 1, **dadurch gekennzeichnet, dass** die Beschichtung auf einem optisch transparenten Substrat aufgebracht ist.

3. Reflexionsmindernde Beschichtung nach Anspruch 1 oder 2, **dadurch gekennzeichnet, dass** das Substrat aus einem Kunststoffmaterial oder einem temperaturempfindlichen Kristallmaterial besteht.

4. Reflexionsmindernde Beschichtung nach einem der Ansprüche 1 bis 3, **dadurch gekennzeichnet, dass** das Schichtmaterial mit höherem Brechungsindex ausgewählt aus Oxiden oder Fluoriden der Elemente der IV. und V. Nebengruppen ist.

5. Reflexionsmindernde Beschichtung nach Anspruch 4, **dadurch gekennzeichnet, dass** das Schichtmaterial für die Schichten mit höherem Brechungsindex Ta₂O₅, ZrO₂, HfO₂, TiO₂ oder Indium-Zinn-Oxid ist.

6. Reflexionsmindernde Beschichtung nach einem der Ansprüche 1 bis 5, **dadurch gekennzeichnet, dass** SiO₂ ein Schichtmaterial für die Schichten mit niedrigerem Brechungsindex ist.

7. Reflexionsmindernde Beschichtung nach einem der Ansprüche 1 bis 5, **dadurch gekennzeichnet, dass** MgF₂ ein Schichtmaterial für die Schichten mit niedrigerem Brechungsindex ist.

8. Reflexionsmindernde Beschichtung nach einem der Ansprüche 1 bis 7, **dadurch gekennzeichnet, dass** die die Grenzschicht zu Luft bildende Schicht aus einem Material mit niedrigerem Brechungsindex gebildet ist.

9. Reflexionsmindernde Beschichtung nach einem der Ansprüche 1 bis 8, **dadurch gekennzeichnet, dass** höher brechende Schichten aus unterschiedlichen Materialien im Schichtsystem angeordnet sind.

10. Reflexionsmindernde Beschichtung nach einem der Ansprüche 1 bis 9, **dadurch gekennzeichnet, dass** das Schichtsystem auf einen vorgebbaren Wellenlängenbereich des Lichts abgestimmt ist.

11. Reflexionsmindernde Beschichtung nach einem der Ansprüche 1 bis 10, **dadurch gekennzeichnet, dass** die Beschichtung eine Gesamtdicke zwischen 500 und 2500 nm aufweist.

12. Reflexionsmindernde Beschichtung nach einem der Ansprüche 1 bis 11, **dadurch gekennzeichnet, dass** das Substrat ein optisches oder optoelektronisches Element ist.

13. Reflexionsmindernde Beschichtung nach einem der Ansprüche 1 bis 12, **dadurch gekennzeichnet, dass** das Substrat ein Brillenglas ist.

## Claims

1. A reflection-reducing coating on a substrate, which coating is formed of an alternating changing-layer system of different layer materials of relatively low and relatively high refractive index respectively, these layers of the material of relatively high refractive index being uniformly distributed within the layer sequence of the changing-layer system formed of at least five individual layers, **characterised in that** the total of the layer thicknesses of these layers of relatively high refractive index is < 5% of the total layer thickness of the coating.

2. A reflection-reducing coating according to Claim 1, **characterised in that** the coating is applied to an optically transparent substrate.

3. A reflection-reducing coating according to Claim I or 2, **characterised in that** the substrate consists of a plastics material or a temperature-sensitive crystal material.

4. A refilection-reducing coating according to one of Claims 1 to 3, **characterised in that** the layer material of relatively high refractive index is selected from oxides or fluorides of the elements of subgroups IV and V.

5. A reflection-reducing coating according to Claim 4, **characterised in that** the layer material for the layers of relatively high refractive index is Ta₂O₅, ZrO₂, HfO₂, TiO₂ or indium/tin oxide.

6. A reflection-reducing coating according to one of Claims 1 to 5, **characterised in that** SiO₂ is a layer material for the layers of relatively low refractive index.

7. A reflection-reducing coating according to one of Claims 1 to 5, **characterised in that** MgF₂ is a layer material for the layers of relatively low refractive index.

8. A reflection-reducing coating according to one of Claims 1 to 7, **characterised in that** the layer forming the boundary layer with the air is formed of a material of relatively low refractive index.

9. A reflection-reducing coating according to one of Claims 1 to 8, **characterised in that** relatively high-refracting layers of different materials are arranged in the layer system.

10. A reflection-reducing coating according to one of Claims 1 to 9, **characterised in that** the layer system is matched to a preset wavelength range of the light.

11. A reflection-reducing coating according to one of Claims I to 10, **characterised in that** the coating has a total thickness of between 500 and 2500 nm.

12. A reflection-reducing coating according to one of Claims 1 to 11, **characterised in that** the substrate is an optical or optoelectronic element.

13. A reflection-reducing coating according to one of Claims 1 to 12, **characterised in that** the substrate is a spectacle lens.

## Revendications

1. Revêtement réducteur de réflexion sur un substrat, qui est constitué d'un système de couches alternées de différents matériaux de couches ayant respectivement un indice de réfraction inférieur et un indice de réfraction supérieur, dans lequel ces couches du matériau ayant un indice de réfraction supérieur sont réparties de manière homogène à l'intérieur de la suite de couches du système de couches alternées formé d'au moins cinq couches individuelles,
**caractérisé en ce que** la somme des épaisseurs de ces couches ayant un indice de réfraction supérieur est inférieure ou égale à 5 % de l'épaisseur totale des couches du revêtement,

2. Revêtement réducteur de réflexion selon la revendication 1, **caractérisé en ce que** le revêtement est appliqué sur un substrat optiquement transparent.

3. Revêtement réducteur de réflexion selon la revendication 1 ou 2, **caractérisé en ce que** le substrat est constitué d'un matériau synthétique ou d'un matériau cristallin sensible à la température.

4. Revêtement réducteur de réflexion selon l'une quelconque des revendications 1 à 3, **caractérisé en ce que** le matériau des couches ayant un indice de réfraction supérieur est choisi parmi les oxydes ou les fluorures des éléments des groupes secondaires IV et V.

5. Revêtement réducteur de réflexion selon la revendication 4, **caractérisé en ce que** le matériau des couches ayant un indice de réfraction supérieur est choisi parmi les composés Ta₂O₅, ZrO₂, HfO₂, TiO₂ ou oxyde d'indium-étain.

6. Revêtement réducteur de réflexion selon l'une quelconque des revendications 1 à 5, **caractérisé en ce que** le SiO₂ est un matériau pour les couches ayant un indice de réfraction inférieur.

7. Revêtement réducteur de réflexion selon l'une quelconque des revendications 1 à 5, **caractérisé en ce que** le MgF₂ est un matériau pour les couches ayant un indice de réfraction inférieur.

8. Revêtement réducteur de réflexion selon l'une quelconque des revendications 1 à 7, **caractérisé en ce que** la couche formant la couche limitrophe de l'air est constituée d'un matériau ayant un indice de réfraction inférieur.

9. Revêtement réducteur de réflexion selon l'une quelconque des revendications 1 à 8, **caractérisé en ce que** des couches de réfraction supérieure en matériaux différents sont agencées dans le système de couches.

10. Revêtement réducteur de réflexion selon l'une quelconque des revendications 1 à 9, **caractérisé en ce que** le système de couches est réglé sur une plage prédéterminable de longueurs d'onde de la lumière.

11. Revêtement réducteur de réflexion selon l'une quelconque des revendications 1 à 10, **caractérisé en ce que** le revêtement présente une épaisseur totale entre 500 et 2500 nm.

12. Revêtement réducteur de réflexion selon l'une quelconque des revendications 1 à 11, **caractérisé en ce que** le substrat est un élément optique ou optoélectronique.

13. Revêtement réducteur de réflexion selon l'une quelconque des revendications 1 à 12, **caractérisé en ce que** le substrat est un verre de lunettes.
